# EUROPÄISCHE PATENTSCHRIFT

(11) **EP 0 771 530 B1**
(45) Veröffentlichungstag und Bekanntmachung des Hinweises auf die Patenterteilung: **31.05.2000**
(21) Anmeldenummer: 95117398.8
(22) Anmeldetag: 06.11.1995
(51) Int. Cl.: A22C 25/16

(54) **Verfahren zum Entgräten von Fischen und Einrichtung zum Durchführen des Verfahrens**
Method and device for removing fish bones
Procédé et dispositif d'extraction des arêtes d'un poisson

(43) Veröffentlichungstag der Anmeldung: 07.05.1997
(73) Patentinhaber: NORDISCHER MASCHINENBAU RUD. BAADER GMBH + CO KG, 23560 Lübeck (DE)
(72) Erfinder: Grabau, Thomas, D-23564 Lübeck (DE); Gütte, Ulrich, D-23843 Bad Oldesloe (DE); Möller, Wolfgang, D-23566 Lübeck (DE)
(74) Vertreter: Patentanwälte Wenzel & Kalkoff

(56) Entgegenhaltungen:
- DE-A- 1 579 433
- DE-A- 2 747 386
- DE-A- 2 946 042
- DE-C- 3 518 960
- FR-A- 1 426 456
- GB-A- 2 185 380

## Beschreibung

Die Erfindung betrifft eine Vorrichtung zum Entgräten von den Pelamiden zugehörigen Fischen durch Herausschneiden einer die Rückenspeichen, Bauchspeichen und die Wirbelsäule enthaltenden Schicht sowie Abschneiden der die Rippen enthaltenden Schichten und geht aus von einer Einrichtung nach dem Oberbegriff von Anspruch 1.

Fische der genannten Spezies weisen im Bereich ihrer von den Rippen umschlossenen Bauchhöhle eine anatomische Besonderheit auf, die dadurch gekennzeichnet ist, daß die dorsalwärtige Begrenzung der Bauchhöhle nicht wie bei den gadidenartigen Fischen durch die Wirbelsäule gebildet wird, sondern über einen wesentlichen Teil der Länge der Bauchhöhle distanziert zu der Wirbelsäule verläuft. Fische dieser Spezies sind daher auch im Bereich der Bauchhöhle mit Bauchspeichen ausgestattet, wobei diejenigen im Bereich der Kiemenhöhle am kürzesten sind, was bedeutet, daß die dorsalwärtige Begrenzung der Bauchhöhle zu der Wirbelsäule zum Schwanz hin divergierend verläuft. Mit anderen Worten bilden die Bauchspeichen im Querschnitt des Fisches betrachtet gemeinsam mit den Rippen eine Struktur von der Gestalt eines umgekehrten Y , wobei die beiden Schenkel durch die Rippen und der Stamm durch die Bauchspeichen gebildet werden. Dabei geht die Y-Gestalt zur Kiemenhöhle hin zunehmend in eine V-Gestalt über, d. h. schließen dort die Rippen an den Flanken der Wirbelsäule an.

Aus der DE 29 46 042 B1 ist eine Einrichtung zum Abtrennen der Filets von Fischen bekannt, bei der das Werkzeug zum Freischneiden der Rippen aus einem Schabewerkzeug mit zu beiden Seiten der Führungsbahn der Fische angeordneten Schabemessern mit als Stützelement ausgebildeter Gegenlage besteht. Jedes Schabemesser hat eine Schneidkante, die von einer Spitze ausgeht und zu der Führungsbahn in Förderrichtung der Fische divergierend verläuft und neben der die Gegenlage federnd ausweichbar angeordnet ist. Nach dem Freischneiden der Bauch- und Rückenspeichen wird das Schabemesser bei Ankunft des Bauchhöhlenendes mit seiner Spitze in den Kehlbereich zwischen den Rückenspeichen und den Ansatzstellen der Rippen an der Wirbelsäule eingesteuert, wobei die Gegenlage die Abstützung der Rippen an der Innenseite der Bauchhöhle übernimmt. Der Förderfortschritt bewirkt dann, daß die Rippen nach außen fortschreitend von dem Filetfleisch getrennt werden.

Die vorstehend dargelegte Funktion dieser Einrichtung setzt voraus, daß die Rippen während des Trennvorganges mit dem Grätengerüst verbunden sind, so daß die auf die Rippen einwirkenden nicht unerheblichen Klemm- und Trennkräfte von dem Grätengerüst aufgefangen werden können.

Bei den in Rede stehenden Fischarten bewirkt der Einsatz der bekannten Einrichtung jedoch, daß mit dem Freischneiden der Bauchspeichen die Rippen unvermeidbar von dem Grätengerüst getrennt werden, so daß die Rippen zwecks Erzielung grätenfreier Filets abschließend in aufwendiger Handarbeit entfernt werden müssen.

Es ist die Aufgabe der Erfindung, eine Einrichtung anzugeben, mit deren Hilfe den Pelamiden zugehörige Fische automatisch und unter hoher Ausbeute an Filetfleisch entgrätet werden können.

Dazu ist eine Einrichtung der eingangs beschriebenen Art geeignet, bei der erfindungsgemäß jedes der Messer zum Herausschneiden der Rippen derart bewegbar angeordnet ist, daß es der Kontur der dorsalwärtigen Begrenzung der Bauchhöhle unmittelbar oberhalb der Ansatzstellen der Rippen an den Bauchspeichen folgen kann.

Bei der bekannten Einrichtung ist jedes Messer mit einem Stellglied versehen und mit seiner Spitze in zu der Symmetrieebene der Fische im wesentlichen paralleler Ebene verstellbar. Erfindungsgemäß erfolgt die entsprechende Steuerung durch einen Rechner, der der Errechnung des jeweiligen zeitlichen Einsatzes und der Steuerwege des Stellgliedes aus den Meßdaten eines Meßmittels zur Bestimmung der Position und Größe jedes Fisches und aus programmierten Proportionen dient. Diese Meßmittel können einen Dickentaster umfassen, mittels dem die maximale Dicke und das nachlaufende Ende jedes Fisches erfaßbar sind.

Eine Optimierung der Ausbeute an Filetfleisch ist dadurch möglich, daß jedem Messer zum Herausschneiden der Rippen ein dessen Schneidkante unter Belassen eines Spaltes gegenüberliegendes Stützelement zugeordnet ist, wobei dieses zweckmäßigerweise mit einem Stellglied versehen ist, welches durch den Rechner im Sinne einer Beeinflussung des Maßes des Spaltes gegenüber der Schneidkante des zugehörigen Messers in Abhängigkeit von den Meßdaten des Meßmittels steuerbar ist. Damit wird ermöglicht, den besagten Spalt der Dicke der Rippen anzupassen, d. h. ausbeutegünstig zu schneiden und die Gefahr der Überbeanspruchung des Filetfleisches durch Verklemmen der Rippen in dem Spalt zu vermeiden.

Weitere vorteilhafte Ausführungen sind den übrigen Unteransprüchen zu entnehmen.

Die Erfindung wird nachstehend anhand eines in der Zeichnung dargestellten Ausführungsbeispiels näher erläutert.

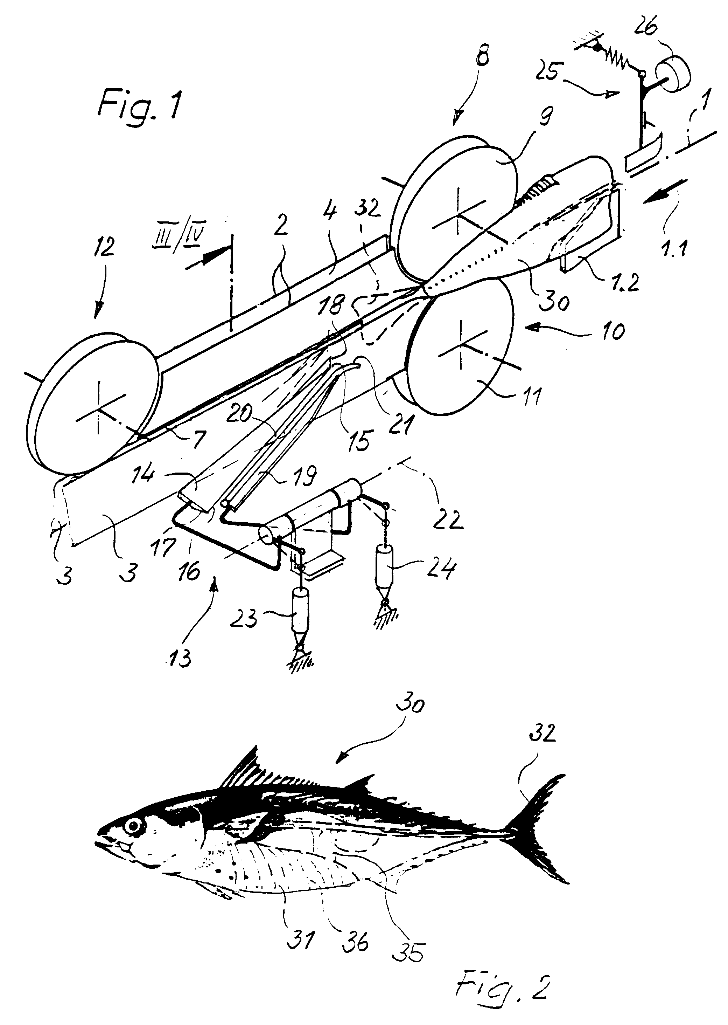

Es zeigen
- Fig. 1: eine perspektivische Seitenansicht der Entgräteinrichtung vereinfacht dargestellt,

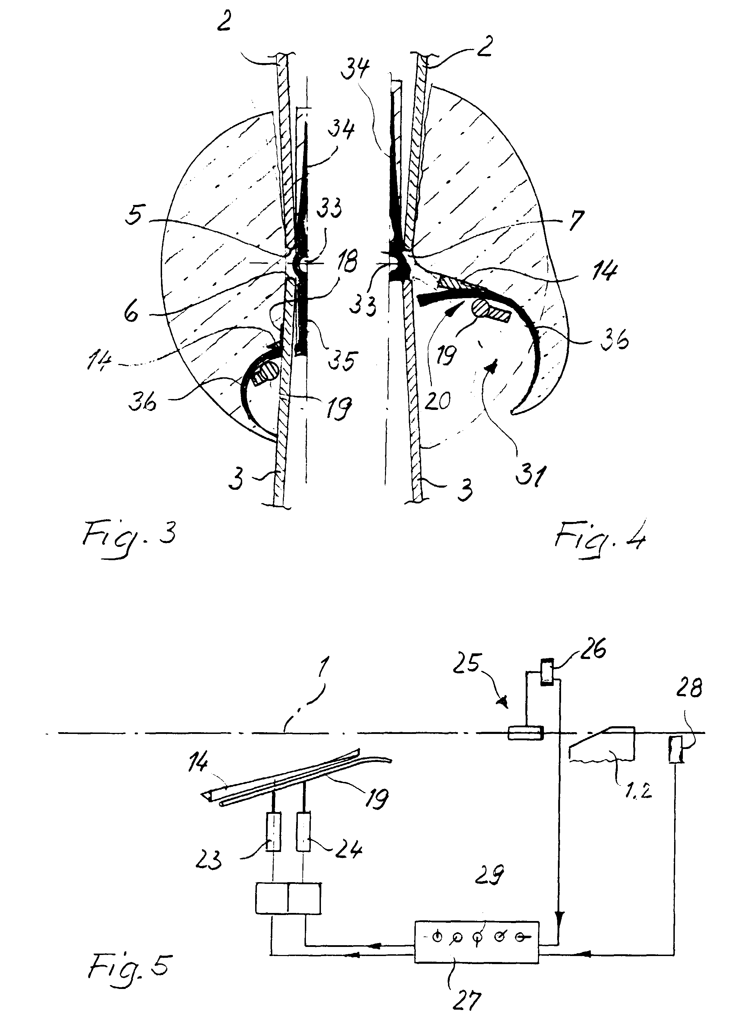

- Fig. 2: eine Seitenansicht eines Vertreters der Pelamiden mit angedeuteter Bauchhöhle,
- Fig. 3: einen ausschnittweisen Halbschnitt durch die Einrichtung längs der Schnittlinie III , nachdem der Schwanzteil des Fisches auf das tiefstehende Werkzeug zum Herausschneiden der Rippen aufgelaufen ist, und
- Fig. 4: einen ausschnittweisen Halbschnitt durch die Einrichtung längs der Schnittlinie IV darstellend einen fortgeschrittenen Trennvorgang.
- Fig. 5: ein Blockschaltbild zeigend die schalttechnische Verknüpfung der Steuerelemente und Stellglieder,

In einem nicht näher dargestellten Gestell einer Entgräteinrichtung für Fische 30 ist ein endloser und auf geeignete Weise angetriebener Förderer 1 mit Aufnahmesätteln 1.2 für die Fische installiert, der zusammen mit symmetrisch zu einer senkrechten Ebene angeordneten, jeweils einen Spalt 4 zwischen sich belassenden Rückenführungen 2 und Bauchführungen 3 einen Förderpfad 1.1 bestimmt. Die Rückenführungen 2 und Bauchführungen 3 sind mit Führungskanten 5 und 6 versehen, die zwischen sich einen Spalt 7 bilden, der die horizontale Ebene des Förderpfades 1.1 bestimmt. Vor den Rückenführungen 2 und in deren Ebenen befindet sich ein aus einem Paar Kreismesser 9 bestehendes Rückenfiletierwerkzeug 8 und vor den Bauchführungen 3 und ebenfalls in deren Ebenen ein aus einem Paar Kreismesser 11 bestehendes Bauchfiletierwerkzeug 10. Die Kreismesser 9 und die Kreismesser 11 stehen sich jeweils mit einem Abstand etwa entsprechend dem Maß des Spaltes 7 gegenüber. Hinter den Rückenführungen 2 ist ein Paar Trennmesser 12 angeordnet, deren gegenseitiger Abstand etwas größer ist als der der Kreismesser 9 des Rückenfiletierwerkzeuges 8 und die in die Bauchführungen 3 eintauchen. Die Trennmesser 12 dienen der abschließenden Trennung der Filets von den vertikalen Wirbelfortsätzen der Wirbelsäule 33 und sind wie auch die Kreismesser 9 und 11 des Rückenfiletierwerkzeuges 8 und des Bauchfiletierwerkzeuges 10 angetrieben. Die Förderung der Fische erfolgt durch die Aufnahmesättel 1.2 , welche durch den Förderer 1 vorbewegt werden und die Fischrümpfe aufgesattelt in ihrer Bauchhöhle 31 aufnehmen sowie mit dem Schwanz 32 voraus fördern.

Zwischen dem Bauchfiletierwerkzeug 10 und den Trennmessern 12 ist im Bereich neben den Bauchführungen 3 ein Werkzeug 13 aus spiegelbildlich ausgeführten Teilwerkzeugen angeordnet, das zum Heraustrennen der Rippen 36 bestimmt ist. Jedes Teilwerkzeug besteht aus einem Messer 14 , das eine gegen die Förderrichtung der Fische gerichtete Spitze 15 und eine von dieser ausgehende, zu dem Förderpfad 1.1 divergierend verlaufende Schneidkante 16 aufweist. Das Messer 14 liegt dabei in einer Ebene, die quer zu dem Förderpfad 1.1 betrachtet nach außen geneigt und in Längsrichtung gegenüber dem Förderpfad 1.1 abfallend angeordnet ist. Die Schneidkante 16 ist durch eine Fase 17 gebildet, die an der Unterseite des Messers 14 angebracht ist und ist an der Spitze 15 mit einer senkrecht aufragenden kurzen Schneide 18 versehen. Der Schneidkante 16 liegt ein als biegeverstärkter Rundstab ausgeführtes Stützelement 19 unter Belassen eines Spaltes 20 gegenüber, das an seinem gegen die Förderrichtung weisenden Ende in eine gegenüber der Spitze 15 des Messers 14 vorstehende Auflaufkufe 21 übergeht.

Sowohl das Messer 14 , als auch das Stützelement 19 sind um eine gemeinsame gestellfeste Achse 22 schwenkbar, die parallel zu dem Förderpfad 1.1 verläuft und sich etwa in der horizontalen Ebene desselben erstreckt. Dabei sind das Messer 14 und das Stützelement 19 unabhängig voneinander gelagert und jeweils über einen Hebelarm mit einem Stellglied 23 bzw. 24 verbunden. Eingangs des Förderpfades 1.1 befindet sich ein geeigneter Dickentaster 25 , welcher auf einen Winkelcodierer 26 einwirkt.

Die Steuerung der Stellglieder 23 und 24 , die vorzugsweise als Schrittmotore ausgebildet sind, erfolgt gemäß Fig. 5 durch einen Rechner 27 nach Aufbereitung der von dem Winkelcodierer 26 abgegebenen Meßsignale, die das maximale Dickenmaß jedes Fisches wiedergeben und anhand des Signalsprunges bei Passieren der Köpfschnittfläche dessen Position registrieren. Weitere den Rechner 27 beeinflussende Signale stammen von einem mit dem Förderer 1 verbundenen Taktgeber 28 . Wahlschalter 29 ermöglichen eine Programmvorwahl mit der Wirkung, daß der Einsatzzeitpunkt und der Verlauf der Steuerwege der Stellglieder 23 und 24 den anatomischen Gegebenheiten unterschiedlicher Fischarten angepaßt werden können.

Die Wirkungsweise der Einrichtung ist folgende:
Ein an seiner Bauchhöhle 31 geöffneter und ausgeweideter Fisch 30 wird mit seiner Bauchhöhle 31 auf einen von dem Förderer 1 herangeführten Aufnahmesattel 1.2 so aufgesattelt, daß seine Schwanzflosse 32 in Förderrichtung weist. Im Verlauf der Förderung verdrängt der Fisch 30 die Tastfläche des Dickentasters 25, wobei dessen größte Auslenkung mittels des Winkelcodierers 26 in Form eines Meßsignals registriert wird. Ein weiteres Meßsignal wird abgegeben, wenn der Dickentaster 25 an dem Köpfschnittende des Fisches 30 abgleitet. Der Fisch 30 wird anschließend mit seiner Schwanzflosse 32 zwischen die Kreismesser 9 und 11 des Rückenfiletierwerkzeuges 8 bzw. des Bauchfiletierwerkzeuges 10 geleitet, so daß diese Werkzeuge den Fisch zu beiden Seiten der Rückenspeichen 34 und der Bauchspeichen 35 bis an die Wirbelsäule 33 heran einschneiden. Dabei werden die Rippen 36 von dem Grätengerüst getrennt. Bei weiterem Vorschieben des Fisches 30 tauchen die Rückenführungen 2 und die Bauchführungen 3 in die gemachten Einschnitte ein und übernehmen die Führung des Fisches, indem sie die Rückenspeichen 34 und die Bauchspeichen 35 enthaltenden Partien zwischen sich aufnehmen.

Der Rechner 27 hat inzwischen aus den Meßsignalen des Dickentasters 25 und programmierten Proportionen errechnet, wann das Ende der Bauchhöhle 31 im Bereich der Spitze 15 ankommen wird und welcher Kontur die dorsalseitige Begrenzung der Bauchhöhle folgt. Entsprechend dieser Auswertung wird nun bei Ankunft des Endes der Bauchhöhle 31 das Messer 14 mit seiner Spitze 15 im Bereich unmittelbar oberhalb der ursprünglichen Ansatzstellen der Rippen 36 an den Bauchspeichen 35 mittels des Stellgliedes 23 in den Fisch eingefahren und im weiteren Verlauf der Förderung entsprechend der errechneten Bauchhöhlenkontur gesteuert. Dabei bewirkt die Schneide 18 im Bereich der Spitze 15 des Messers 14 , daß im kopfseitigen Endbereich der Bauchhöhle 31 das Filetfleisch von den Flanken der Wirbelsäule 33 getrennt wird. Gleichzeitig wurde das in die Bauchhöhle 31 einzusteuernde Stützelement 19 gegenüber der Schneidkante 16 des Messers 14 mittels des Stellgliedes 24 auf einen Spalt 20 eingestellt, der ebenfalls durch Auswertung der Meßsignale des Dickentasters 25 durch den Rechner 27 ermittelt wurde und die Dicke der Rippen 36 im Bereich des Endes der Bauchhöhle 31 berücksichtigt. Im Verlauf der Förderung wird das Maß des Spaltes 20 entsprechend dem Querschnittsverlauf der Rippen 36 gesteuert.

Aufgrund der Divergenz der Schneidkante 16 bewirkt die Förderung, daß die in dem Fleisch eingebetteten Rippen 36 fortschreitend nach außen herausgeschnitten werden, wobei die Steuerung des Messers 14 und des Stützelementes 19 eine Einstellung ermöglicht, bei der einerseits die Gefahr der Klemmung und damit des Herausreißens der Rippen 36 vermieden ist und andererseits eine optimale Ausbeute an Filetfleisch erreichbar ist. Dabei kann die Funktionssicherheit dieses Werkzeuges dadurch gesteigert werden, daß ein nicht gezeigter federnder Andrücker Verwendung findet, der vorzugsweise als Rundstab ausgebildet und über dem Spalt 20 von außen auf den Fisch einwirkend angeordnet ist.

Nach Durchlauf des Fisches kann durch Vergrößern des Spaltes 20 eine automatisch steuerbare Stellung vorgesehen sein, die eine Selbstreinigung von etwaigen Rückständen im Bereich der Schneidkante 16 ermöglichen.

Grundsätzlich kann die vorstehend beschriebene Einrichtung auch eingesetzt werden, wenn es um das Entgräten von Fischen geht, die eine eindeutige Positionierung in bezug auf das Bauchhöhlenende nicht zulassen. Dazu gehören auch Grundfischarten wie beispielsweise Grouper, Brassen u. a. .

### Bezugszeichenliste

- 1: Förderer
- 1.1: Förderpfad
- 1.2: Aufnahmesattel

- 2: Rückenführung
- 3: Bauchführung
- 4: Spalt (untereinander)
- 5: Führungskante
- 6: Führungskante
- 7: Spalt (zwischen 2 und 3 )
- 8: Rückenfiletierwerkzeug
- 9: Kreismesser
- 10: Bauchfiletierwerkzeug
- 11: Kreismesser
- 12: Trennmesser
- 13: Werkzeug
- 14: Messer
- 15: Spitze
- 16: Schneidkante
- 17: Fase
- 18: Schneide (senkrecht)
- 19: Stützelement
- 20: Spalt
- 21: Auflaufkufe
- 22: Achse
- 23: Stellglied
- 24: Stellglied
- 25: Dickentaster
- 26: Winkelcodierer
- 27: Rechner
- 28: Taktgeber
- 29: Wahlschalter
- 30: Fisch
- 31: Bauchhöhle
- 32: Schwanzflosse
- 33: Wirbelsäule
- 34: Rückenspeiche
- 35: Bauchspeiche
- 36: Rippe
37

## Patentansprüche

1. Einrichtung zum Entgräten von den Pelamiden zugehörigen Fischen (30) durch Herausschneiden einer die Rückenspeichen, Bauchspeichen und die Wirbelsäule enthaltenden Schicht sowie Abschneiden der die Rippen enthaltenden Schichten mit einem Förderer (1) zum Fördern der Fische (30) in Erstreckungsrichtung ihrer Wirbelsäule unter einheitlicher Ausrichtung derselben und der Symmetrieebene der Fische (30) sowie mit jeweils zu beiden Seiten des Förderpfades (1.1) angeordneten Werkzeugen (8, 10, 12, 13) zum Herausschneiden der Rückenspeichen (34) , der Bauchspeichen (35) , der Wirbelsäule (33) und der Rippen (36) , wobei das Werkzeug (13) zum Herausschneiden der Rippen (36) je ein Messer (14) umfaßt, welches eine gegen die Förderrichtung der Fische (30) gerichtete Spitze (15) und eine von dieser ausgehende, zu dem Förderpfad (1.1) divergierend verlaufende Schneidkante (16) aufweist, wobei jedes Messer zum Herausschneiden der Rippen (36) mit einem Stellglied (23) versehen und mit seiner Spitze (15) in zu der Symmetrieebene der Fische (30) im wesentlichen paralleler Ebene verstellbar ist, **dadurch gekennzeichnet,** daß jedes Messer (14) derart bewegbar angeordnet ist, daß es der Kontur der dorsalwärtigen Begrenzung der Bauchhöhle (31) unmittelbar oberhalb der Ansatzstellen der Rippen (36) an den Bauchspeichen (34) folgen kann und daß die Einrichtung mit einem Rechner (27) versehen ist zur Errechnung des jeweiligen zeitlichen Einsatzes und der Steuerwege des Stellgliedes (23) des Messers (14) entsprechend der aus den Meßdaten eines Meßmittels (25) zur Bestimmung der Position und Größe jedes Fisches (30) und aus programmierten Proportionen errechneten Bauchhöhlenkontur.

2. Einrichtung nach Anspruch 1, **dadurch gekennzeichnet,** daß die Meßmittel einen Dickentaster (25) umfassen, mittels dem die maximale Dicke und das nachlaufende Ende jedes Fisches (30) erfaßbar sind.

3. Einrichtung nach einem der Ansprüche 1 oder 2, **dadurch gekennzeichnet,** daß jedem Messer (14) zum Herausschneiden der Rippen (36) ein dessen Schneidkante (16) unter Belassen eines Spaltes (20) gegenüberliegendes Stützelement (19) zugeordnet ist.

4. Einrichtung nach Anspruch 3, **dadurch gekennzeichnet,** daß das Stützelement (19) mit einem Stellglied (24) versehen ist, welches durch den Rechner (27) im Sinne einer Beeinflussung des Maßes des Spaltes (20) gegenüber der Schneidkante (16) des zugehörigen Messers (14) in Abhängigkeit von den Meßdaten des Meßmittels (25) steuerbar ist.

5. Einrichtung nach Anspruch 1, **dadurch gekennzeichnet,** daß der Förderer (1) mindestens einen Aufnahmesattel (1.2) aufweist, auf den kopflose Fische (30) mit ihrer Bauchhöhle (31) aufsetzbar und mittels dem die Fische (30) mit dem Schwanz (32) voraus vorschiebbar sind.

6. Einrichtung nach Anspruch 1, **dadurch gekennzeichnet,** daß sich längs des Förderpfades (1.1) erstreckende Führungsmittel (2.3) zum Führen des Fisches (30) in den durch die 0 Werkzeuge (8,10) zum Freischneiden der Bauch- (35) und Rückenspeichen (34) eingebrachten Einschnitten vorgesehen sind.

## Claims

1. Apparatus for deboning fish of the pelamid family by cutting a layer containing the back spokes, the belly spokes and the backbone as well as by cutting off the layers containing the ribs, with a conveyor (1) for conveying the fish (30) in the direction of extension of their backbone while uniformly aligning the same and the plane of symmetry of the fish (30), as well as with tools (8, 10, 12, 13) arranged on both sides of the conveying path (1.1) for cutting out the back spokes (34), the belly spokes (35), the backbone (33) and the ribs (36), the tool (13) for cutting out the ribs (36) comprising one knife (14), each, which has a pint (15) directed against the conveying direction of the fish and a cutting edge (16) extending from said point to diverge with respect to said conveying path, each of the knives being provided with an actuation member (23) and designed to be adjustable with its point (15) in a plane essentially parallel to the plane of symmetry of the fish (30), **characterized in** that each knife (14) is arranged to be movable such that it can follow the contour of the dorsal-side boundary of the belly cavity (31) immediately above the locations of attachment of the ribs (36) to the belly spokes (34) and that the apparatus is provided with a computer (27) for computing the respective time of operation and the control paths of the actuation member (23) of the knife (14) corresponding to the belly cavity contour computed from the measurement data of a measuring means (25) for determining the position and size of each fish (30) and from programmed proportions.

2. Apparatus according to claim 1, **characterized in** that the measuring means comprise a thickness feeler (25) by means of which the maximum thickness and the trailing end of each fish (30) can be detected.

3. Apparatus according to any one of claims 1 or 2, **characterized in** that a support element (19) is associated with each knife (14) for cutting out the ribs (36), which support element opposes the cutting edge (16) of the knife while leaving a gap (20).

4. Apparatus according to claim 3, **characterized in** that the support element (19) is provided with an actuation member (24) which is adapted to be controlled by the computer (27) in the sense of influencing the dimension of the gap (20) with respect to the cutting edge (16) of the associated knife (14) depending on the measurement data of the measurement means (25).

5. Apparatus according to claim 1, **characterized in** that the conveyor (1) has at least one receiving saddle (1.2) onto which headless fish (30) can be placed with their belly cavity (31) and by means of which the fish (30) can be advanced with their tail (32) leading.

6. Apparatus according to claim 1, **characterized in** that guiding means (2.3) are provided extending along the conveying path (1.1) and adapted to guide the fish in the cuts made by the tools (8, 10) for cutting free the belly (35) and back spokes (34).

## Revendications

1. Dispositif pour désarêter des poissons (30) appartenant aux pélamides, par dégagement d'une couche contenant les rayons dorsaux, les rayons ventraux et la colonne vertébrale, et aussi par découpage des couches contenant les côtes, comportant un transporteur (1) destiné à transporter les poissons (30) dans la direction de l'extension de leur colonne vertébrale, en assurant une orientation uniforme de ces derniers et du plan de symétrie des poissons (30), ainsi que des outils (8, 10,12, 13), disposés sur les deux côtés de la trajectoire de transport (1.1), destinés à dégager les rayons dorsaux (34), les rayons ventraux (35), la colonne vertébrale (33) et les côtes (36), chaque outil (13) comportant, pour dégager les côtes (36), un couteau (14) qui comporte une pointe (15), dirigée dans le sens inverse du sens de transport des poissons (30), ainsi qu'une arête de coupe (16), partant de cette pointe et allant d'une manière divergente vers la trajectoire de transport (1.1), chaque couteau destiné à dégager les côtes (36) étant pourvu d'un vérin (23), et, par sa pointe (15), pouvant être déplacé dans un plan essentiellement parallèle au plan de symétrie des poissons (30), caractérisé en ce que chaque couteau (14) est disposé d'une manière mobile de telle sorte qu'il puisse suivre le contour de la délimitation côté dorsal de la cavité abdominale (31), immédiatement au-dessus des points d'insertion des côtes (36) au niveau des rayons ventraux (34), et en ce que le dispositif est pourvu d'un calculateur (27), pour calculer le temps d'utilisation et le parcours de commande du vérin (23) du couteau (14), en fonction du contour de la cavité abdominale, calculé à partir des données de mesure d'un moyen de mesure (25) destiné à déterminer la position et la taille de chaque poisson (30), et à partir de proportions programmées.

2. Dispositif selon la revendication 1, caractérisé en ce que les moyens de mesure comportent un palpeur d'épaisseur (25), à l'aide duquel il est possible de déterminer l'épaisseur maximale et l'extrémité suivante de chaque poisson (30).

3. Dispositif selon l'une des revendications 1 ou 2, caractérisé en ce qu'à chaque couteau (14) destiné à dégager les côtes (36) est affecté un élément de soutènement (19), opposé à son arête de coupe (16), en laissant une fente (20).

4. Dispositif selon la revendication 3, caractérisé en ce que l'élément de soutènement (19) est pourvu d'un vérin (24), qui peut être commandé par le calculateur (27) dans le sens d'une influence sur la dimension de la fente (20) par rapport à l'arête de coupe (16) du couteau (14) correspondant, en fonction des données de mesure du moyen de mesure (25).

5. Dispositif selon la revendication 1, caractérisé en ce que le transporteur (1) comporte au moins une selle de réception (1.2), sur lequel des poissons (30) peuvent être posés par leur cavité abdominale (31), et à l'aide duquel les poissons (30) peuvent, par la queue (32), être poussés vers l'avant.

6. Dispositif selon la revendication 1, caractérisé en ce que des organes de guidage (2.3), s'étendant le long de la trajectoire de transport (1.1), sont prévus pour guider le poisson (30) dans des encoches réalisées par les outils (8, 10) pour dégager les rayons ventraux (35) et dorsaux (34).
